# EUROPEAN PATENT APPLICATION

(11) **EP 2 394 522 A1**
(43) Date of publication of application: **14.12.2011**
(21) Application number: 10173762.5
(22) Date of filing: 23.08.2010
(51) Int. Cl.: A43B 1/00, A43B 5/14

(54) **Cycling shoe**

(30) Priority: 11.06.2010 TW 099119048
(71) Applicant: Haka Co., Ltd., Taichung county 428 (TW)
(72) Inventor: Wen-Tsung, Chang, 428, Taichung County (TW)
(74) Representative: Lang, Christian

(57) **Abstract**

A cycling shoe comprises a shoe upper and a shoe sole. The shoe sole is provided with at least one magnetic plate, so that the cycling shoe can be magnetically attracted to a bicycle pedal including magnetic elements. The shoe sole is further provided with stopping blocks to be engaged in the bicycle pedal, preventing the cycling shoe from sliding relative to the bicycle pedal. By such arrangements, the cycling shoe has the advantages of being easy to slide out, stable engagement, and labor-saving.

## Description

### BACKGROUND OF THE INVENTION

### Field of the Invention

The present invention relates to a shoe; and more particularly to a cycling shoe.

### Description of the Prior Art

Bicycle gradually becomes the most popular travel means due to its environmental friendly property, which satisfies the current environment protection concept of energy saving & carbon reduction. In addition, bicycle can also serve as a popular means of fitness and recreation.

However, during riding, the rider's feet are likely to slip off the pedals since they are not fixed to the pedals, which adversely affects the smooth transmission of the pedaling force, inevitably causing the rider to spend more energy to ride the bicycle.

To solve the above problems, a magnetic force moment connection device between bicycle pedal and cycling shoes is developed on the market, the bicycle pedal is provided with magnetic elements while the respective cycling shoes are equipped with magnetic plates, so that when stepping on the bicycle pedals, the cycling shoes will be fixed to the respective pedals by magnetic attraction, making riding easier and much labor-saving without the safety concern that the conventional cycling shoes are difficult to disengage from the pedals. A new problem, however, is that the magnetic attraction force only occurs on two contact surfaces and is an upward-pulling force to the respective contact surfaces. When a shearing force is produced in the horizontal direction of the two contact surfaces, the cycling shoes are likely to slide horizontally relative to the pedals, leading to the slippage of the cycling shoes relative to the pedals. Therefore, it can be found that the above conventional connection cannot assuredly fix the cycling shoes on the bicycle pedals.

The present invention has arisen to mitigate and/or obviate the afore-described disadvantages.

### SUMMARY OF THE INVENTION

The primary objective of the present invention is to provide a cycling shoe which has the advantages of easy to slide out, stable engagement, and labor-saving.

To achieve the above objective, a cycling shoe in accordance with the present invention is applicable to a bicycle pedal including magnetic elements and comprises a shoe upper, and a shoe sole

The shoe sole includes a top surface and a bottom surface, the top surface of the shoe sole is combined onto a bottom of the shoe upper, the shoe sole is provided with at least one magnetic plate at a position corresponding to bicycle pedal. The magnetic plate can be disposed on the top surface, or on the back surface or between the top surface and the back surface.

The bicycle pedal includes a main shaft and two side plates that are symmetrically located at both sides of the main shaft, between the main shaft and each of the side plates is disposed a magnetic element.

On the bottom surface of the shoe sole are provided four side stopping blocks to be engaged in the clearances formed at both sides of the respective magnetic elements of the bicycle pedal, and a middle stopping block to be engaged in a clearance between the two magnetic elements

### BRIEF DESCRIPTION OF THE DRAWINGS

Fig. 1 is a perspective view showing how a cycling shoe in accordance with the present invention is combined to a bicycle pedal;
Fig. 2 is a cross-sectional view of the cycling shoe in accordance with the present invention
Fig. 3 is a bottom view showing that the cycling shoe in accordance with the present invention is combined to the bicycle pedal;
Fig. 4 is a perspective view showing that the cycling shoe in accordance with the present invention is provided with only one magnetic plate;
Fig. 5 is a perspective view showing that the cycling shoe in accordance with the present invention is provided with three magnetic plates; and
Fig. 6 is a cross-sectional view showing that the respective stopping blocks are disposed in an accommodation groove in the shoe sole in accordance with the present invention.

### DETAILED DESCRIPTION OF THE PREFERRED EMBODIMENTS

The present invention will be clearer from the following description when viewed together with the accompanying drawings, which show, for purpose of illustrations only, the preferred embodiment in accordance with the present invention.

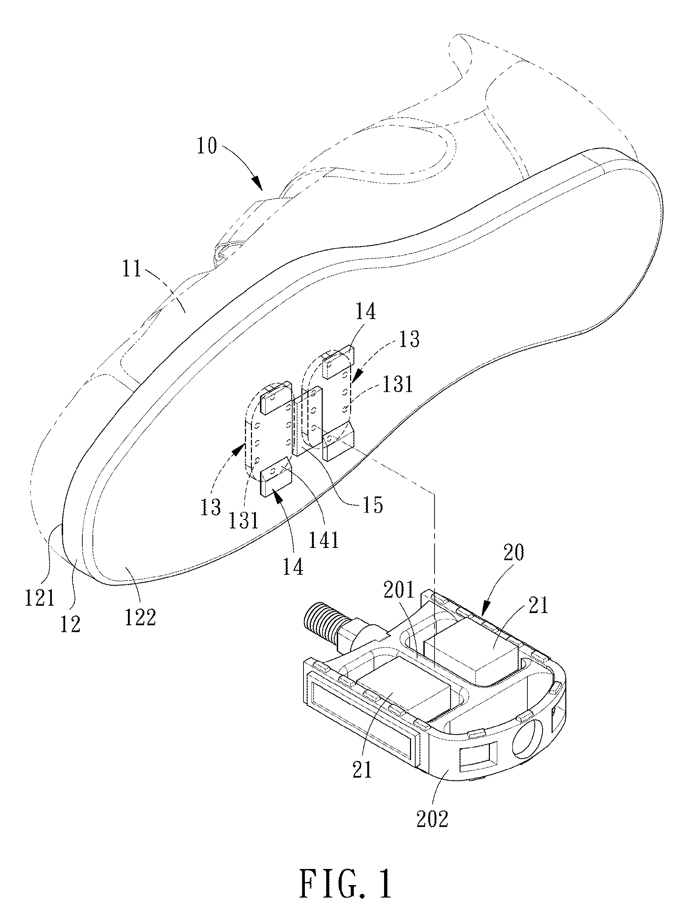

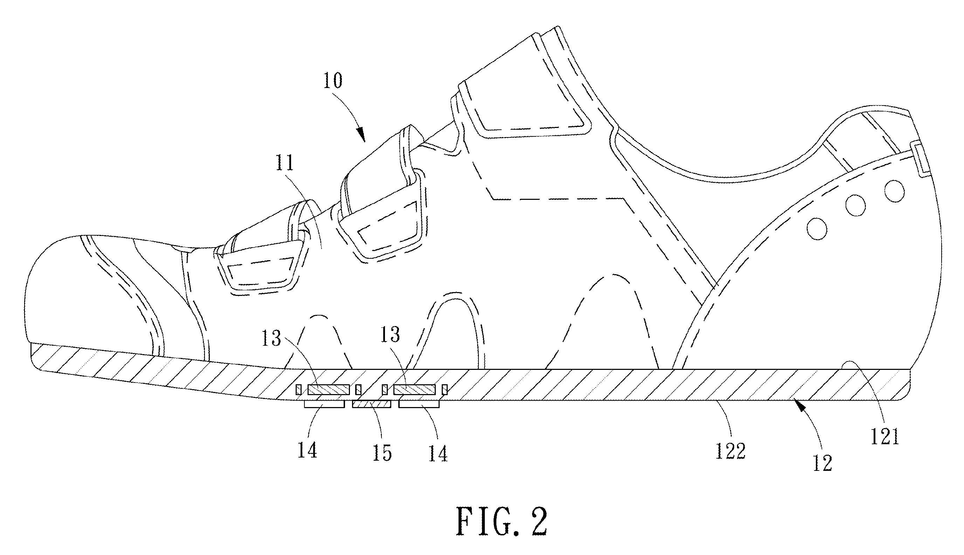

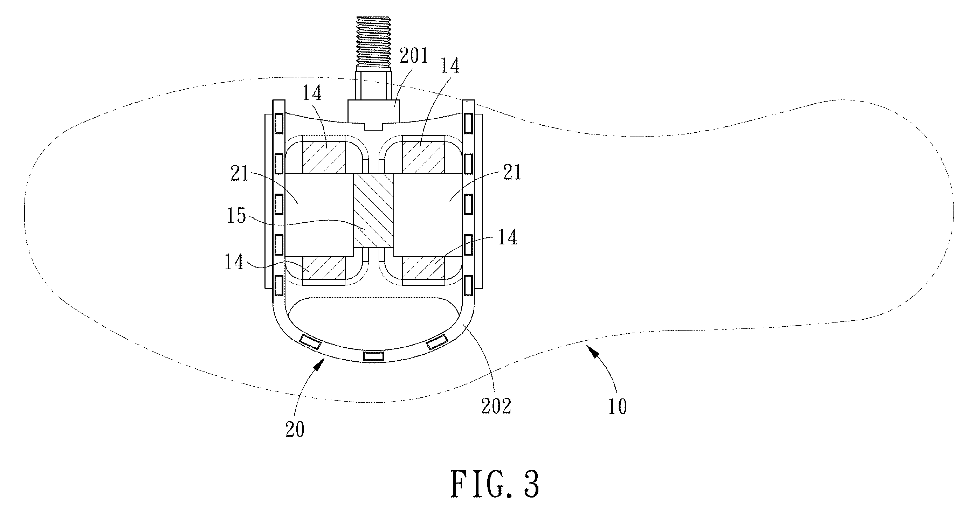

Referring to Figs. 1-3, a cycling shoe 10 in accordance with the present invention is applicable to a bicycle pedal 20 including magnetic elements 21 and comprises a shoe upper 11 and a shoe sole 12.

The bicycle pedal 20 includes a main shaft 201 and two side plates 202 that are symmetrically located at both sides of the main shaft 201. Between the main shaft 201 and each of the side plates 202 is disposed one magnetic element 21.

The shoe sole 12 includes a top surface 121 and a bottom surface 122. The top surface 121 of the shoe sole 12 is combined onto a bottom of the shoe upper 11. The shoe sole 12 is provided with at least one magnetic plate 13 at a position corresponding to the bicycle pedal 20. The magnetic plate 13 is disposed on the top surface 121 or disposed between the top surface 121 and the bottom surface 122, or disposed on the bottom surface 122. The magnetic plate 13 can be integrally formed on the shoe sole 12 during the formation of the shoe sole 12 or adhered to the shoe sole 12. In the present embodiment, the magnetic plate 13 is disposed between the top surface 121 and the bottom surface 122 of the shoe sole 12 and formed with plural through holes 131 along a circumference thereof. In the present embodiment, the shoe sole 12 is provided with two magnetic plates 13 that are spaced from each other while being arranged opposite the two magnetic elements 21 of the bicycle pedal 20. In addition, on the bottom surface 122 of the shoe sole 12 are provided four side stopping blocks 14 to be engaged in the clearances formed at both sides of the respective magnetic elements 21 of the bicycle pedal 20, and a middle stopping block 15 to be engaged in a clearance between the two magnetic elements 21. Two of the four side stopping blocks 14 that are located at the same side of the magnetic elements 21 are each formed with a guiding incline 141 on an end thereof.

The magnetic plates 13 of the shoe sole 12 are disposed on the shoe sole 12 in such a manner that the magnetic plates 13 are disposed in a mold in advance before the formation of the shoe sole 12, so that the magnetic plates 13 can be integrally formed with the shoe sole 12 without the use of assembling.

The aforementioned is the summary of the positional and structural relationship of the respective components of the preferred embodiment in accordance with the present invention.

For a better understanding of the present invention, its operation and function, reference should be made to the following description:
Referring to Figs. 1-3 again, when in use, since the shoe sole 12 is provided with the magnetic plates 13, if the rider wearing the cycling shoes 10 of the present invention steps on the bicycle pedals 20, the magnetic plates 13 will be magnetically attracted to the magnetic elements 21 of the bicycle pedal 20 to fix the cycling shoes 10 on the bicycle pedals 20, making the riding more labor-saving. Furthermore, during riding, the side stopping blocks 14 of the shoe sole 12 can be engaged at both sides of the respective magnetic elements 21 to prevent the cycling shoes 10 from sliding right and left relative to the bicycle pedal 20, and the middle stopping block 15 can be engaged between the two magnetic elements 21 to prevent the cycling shoes 10 from sliding back and forth relative to the bicycle pedals 20, thereby substantially improving connection stability between the cycling shoes 20 and the bicycle pedals 20.

In addition, since the side stopping blocks 14 to be engaged with the clearances at both sides of the respective magnetic elements 21 are formed with the guiding inclines 141, the cycling shoe 10 can easily slide out of the bicycle pedal 20 in a transverse direction by sliding along the guiding inclines 141 of the side stopping blocks 14. Therefore, it can be found that the bicycle shoe 10 is allowed to quickly slide out of the bicycle pedal 20 in the transverse direction which being restricted from movement in all other directions, avoiding an unexpected slippage of the cycling shoe from the bicycle pedal.

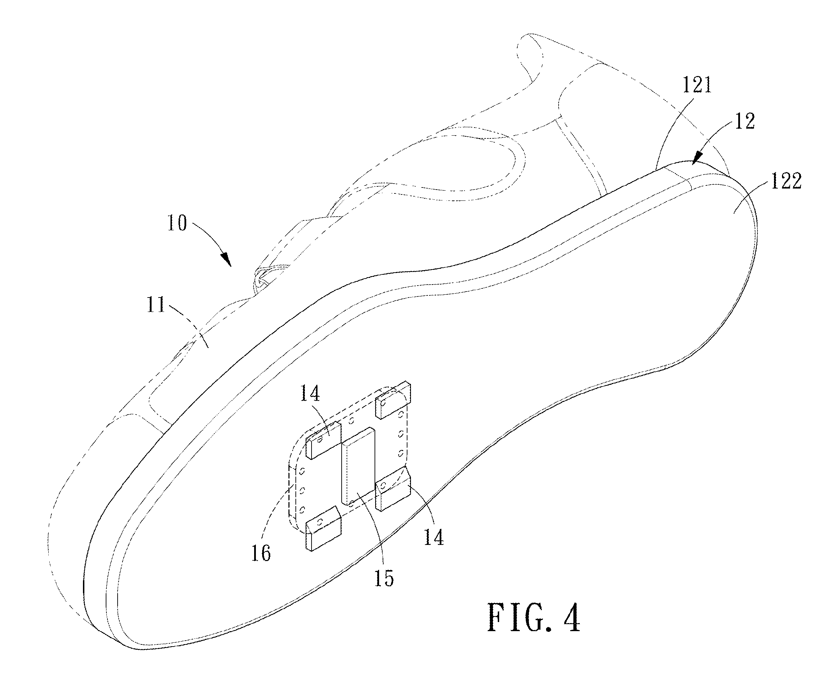

Referring to Fig. 4, in the previous embodiment, the shoe sole 12 can also be provided with only one magnetic plate 16, and the magnetically attractive area of the magnetic plate 16 is sized correspondingly to the overall magnetic attracting area of all magnetic elements 21 of the bicycle pedal 20, so that the magnetic plate 16 can offer the same function as described above.

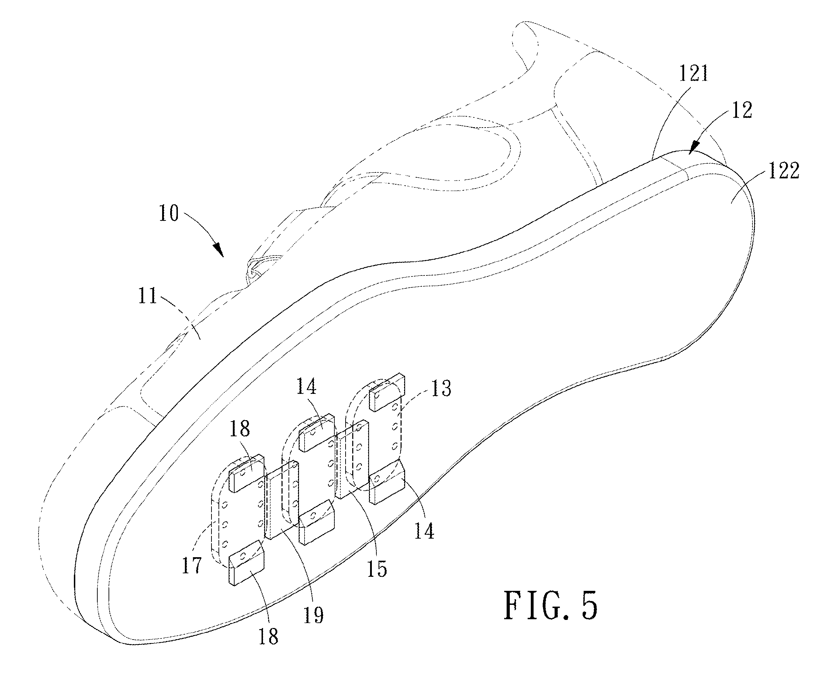

Referring to Fig. 5, in the previous embodiment, the shoe sole 12 further includes a front magnetic induction pate 17 located before the two magnetic plates 13, the front magnetic plate 17 and the two magnetic plates 13 are spaced at the same interval. In addition, the front magnetic plate 17 is further provided on the bottom surface 122 of the shoe sole 12 with two front side stopping blocks 18 and a front middle stopping block 19. By such arrangements, the shoe sole 12 is totally provided with three magnetic plates, so that the rider can adjust the pedaling position of the cycling shoe on the bicycle pedal 20 and accordingly adjust the pedaling force by selectively combining the front two or the last two magnetic plates to the bicycle pedal 20.

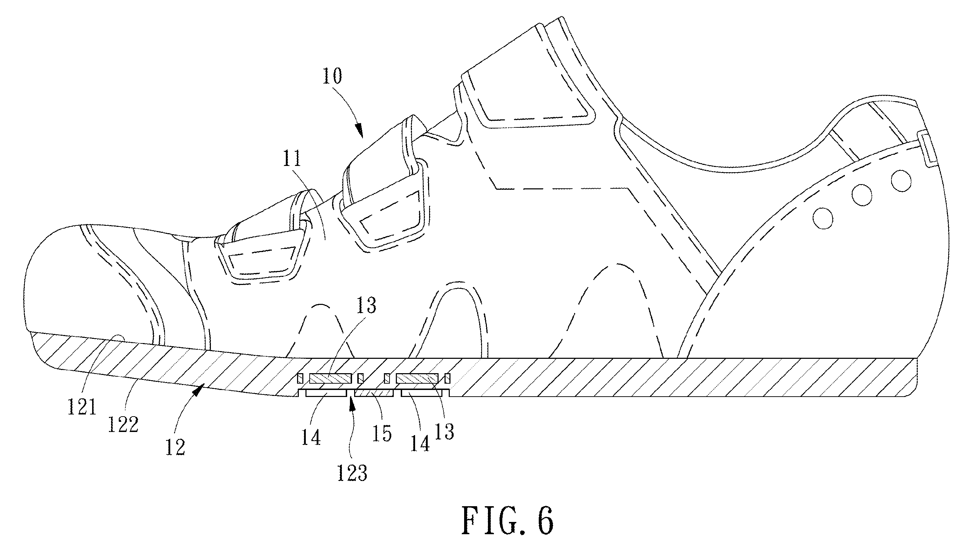

Further referring to Fig. 6, the respective side stopping blocks 14 can be disposed in an accommodation groove 123 in the shoe sole 12 in such a manner that the bottom surface 122 of the shoe sole 12 is flush with the respective side stopping blocks 14, preventing the respective side stopping blocks 14 from protruding from the bottom surface 122 while enhancing the walking comfort of the rider wearing the cycling shoe 10.

While we have shown and described various embodiments in accordance with the present invention, it is clear to those skilled in the art that further embodiments may be made without departing from the scope of the present invention.

## Claims

1. A cycling shoe 10 being applicable to a bicycle pedal 20 including a main shaft 201 and two side plates 202 that are symmetrically located at both sides of the main shaft 201, between the main shaft 201 and each of the side plates 202 being disposed one magnetic element 21; the cycling shoe 10 comprising:
a shoe upper 11; and
a shoe sole 12 including a top surface 121 and a bottom surface 122, the shoe sole 12 being combined onto a bottom of the shoe upper 11, the shoe sole 12 being provided with at least one magnetic plate 13 at a position corresponding to the bicycle pedal 20.

2. The cycling shoe 10 as claimed in claim 1, wherein the at least one magnetic plate 13 is disposed between the top surface 121 and the bottom surface 122 of the shoe sole 12.

3. The cycling shoe 10 as claimed in claim 1, wherein the shoe sole 12 is provided on the bottom surface 122 thereof with four side stopping blocks 14 to be engaged in clearances formed at both sides of the respective magnetic elements 21 of the bicycle pedal 20.

4. The cycling shoe 10 as claimed in claim 3, wherein the shoe sole 12 is further provided on the bottom surface 122 thereof with a middle stopping block 15 to be engaged in a clearance between the two magnetic elements 21.

5. The cycling shoe 10 as claimed in claim 3, wherein two of the four side stopping blocks 14 that are located at the same side of the magnetic elements 21 are each formed with a guiding incline on an end thereof.

6. The cycling shoe 10 as claimed in claim 3, wherein the respective side stopping blocks 14 are disposed in an accommodation groove 123 in the shoe sole 12.

7. The cycling shoe 10 as claimed in claim 4, wherein the respective side stopping blocks 14 are disposed in an accommodation groove 123 in the shoe sole 12.

8. The cycling shoe 10 as claimed in claim 5, wherein the respective side stopping blocks 14 are disposed in an accommodation groove 123 in the shoe sole 12.

9. The cycling shoe 10 as claimed in claim 1, wherein the magnetic plate 13 is formed with plural through holes 131 along a circumference thereof.

10. The cycling shoe 10 as claimed in claim 1, wherein the shoe sole 12 is provided with only one magnetic plate 16, and a magnetically attractive area of the magnetic plate 16 is sized correspondingly to an overall magnetic attracting area of all magnetic elements 21 of the bicycle pedal 20.

11. The cycling shoe 10 as claimed in claim 1, wherein the shoe sole 12 is provided with two magnetic plates 13 that are spaced from each other and arranged opposite the two magnetic elements 21 of the bicycle pedal 20.

12. The cycling shoe 10 as claimed in claim 1, wherein the shoe sole 12 further includes a front magnetic induction pate 17 located before the two magnetic plates 13, the front magnetic plate 17 and the two magnetic plates 13 are spaced at the same interval.

13. The cycling shoe 10 as claimed in claim 11, wherein the front magnetic plate 13 is provided on the bottom surface 122 of the shoe sole 12 with two front side stopping blocks 18 and a front middle stopping block 19.

14. The cycling shoe 10 as claimed in claim 13, wherein the respective side stopping blocks 14 are disposed in an accommodation groove 123 in the shoe sole 12.
